(19) Europäisches Patentamt
European Patent Office
Office européen des brevets

(11) **EP 4 160 750 A1**

(12) **EUROPEAN PATENT APPLICATION**
published in accordance with Art. 153(4) EPC

(43) Date of publication:
**05.04.2023 Bulletin 2023/14**

(21) Application number: **20942665.9**

(22) Date of filing: **30.06.2020**

(51) International Patent Classification (IPC):
$H01M\ 4/66^{(2006.01)}$     $H01M\ 10/052^{(2010.01)}$

(52) Cooperative Patent Classification (CPC):
**H01M 4/66; H01M 10/052;** Y02E 60/10

(86) International application number:
**PCT/CN2020/099426**

(87) International publication number:
**WO 2022/000309 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventors:
• **ZHANG, Yibo
Ningde, Fujian 352100 (CN)**

• **HU, Qiaoshu
Ningde, Fujian 352100 (CN)**
• **YAN, Kun
Ningde, Fujian 352100 (CN)**
• **ZHANG, Nan
Ningde, Fujian 352100 (CN)**

(74) Representative: **Klunker IP
Patentanwälte PartG mbB
Destouchesstraße 68
80796 München (DE)**

(54) **CURRENT COLLECTOR, ELECTROCHEMICAL DEVICE COMPRISING SAME, AND ELECTRONIC DEVICE**

(57)     This application provides a current collector, an electrochemical device containing the current collector, and an electronic device. The current collector includes a polymer substrate material and a conductive material. An electron resistivity of the current collector in an X-Y in-plane direction is 10 Ω·cm to 1000 Ω·cm, and an electron resistivity of the current collector in a Z direction is 0.01 Ω·cm to 30 Ω·cm. The current collector according to this application is excellent in oxidation resistance, reduction resistance, ionic insulation, mechanical strength, thermal stability, increases the energy density of bipolar electrochemical devices, and is more cost-effective and more suitable for mass production.

FIG. 1

**Description**

**TECHNICAL FIELD**

This application relates to the electrochemical field, and in particular, to a current collector, an electrochemical device containing the current collector, and an electronic device.

**BACKGROUND**

Lithium-ion batteries are widely used in the field of consumer electronics by virtue of characteristics such as a high specific energy, a high working voltage, a low self-discharge rate, a small size, and a light weight. With rapid development of electric vehicles and portable electronic devices, people are requiring higher performance indicators of a lithium-ion battery such as a higher energy density and higher safety and cycle performance.

However, as limited by an inherent electrochemical system, the working voltage of a single lithium-ion battery is usually no more than 5 V Nevertheless, the lithium-ion battery is practically used in many high-voltage application scenarios such as electric vehicle (EV, Electric vehicle) and energy storage system (ESS, Energy Storage System).

To improve the output voltage of the lithium-ion battery, a typical solution in the prior art is to connect a plurality of lithium-ion batteries in series by using an external wire. However, due to a capacity difference between individual lithium-ion batteries, an overall energy density (ED) of the series-connected lithium-ion batteries is relatively low, and such a series connection method restricts the application scope of the lithium-ion batteries.

**SUMMARY**

An objective of this application is to provide a current collector, an electrochemical device containing the current collector, and an electronic device to increase the energy density of lithium-ion batteries. Specific technical solutions are as follows:

A first aspect of this application provides a current collector, including a polymer substrate material and a conductive material. An electron resistivity of the current collector in an X-Y in-plane direction is 10 $\Omega$·cm to 1000 $\Omega$·cm, and an electron resistivity of the current collector in a Z direction is 0.01 $\Omega$·cm to 30 $\Omega$·cm.

In an embodiment of this application, a weight percent of the conductive material in a mass of the current collector is 10% to 70%.

In an embodiment of this application, the conductive material includes at least one of a one-dimensional conductive material or a two-dimensional conductive material. An angle between a length direction of the one-dimensional conductive material or a plane direction of the two-dimensional conductive material and the Z direction of the current collector is 0° to 30°.

In an embodiment of this application, a ratio of the electron resistivity of the current collector in the X-Y in-plane direction to the electron resistivity of the current collector in the Z direction is 5 to 4000.

In an embodiment of this application, a thickness of the current collector is 2 $\mu$m to 500 $\mu$m.

In an embodiment of this application, one end or both ends of the conductive material are exposed on a surface of the polymer substrate material.

In an embodiment of this application, the one-dimensional conductive material is 0.1 $\mu$m to 200 $\mu$m in length, 2 nm to 500 nm in diameter, and 5 m$^2$/g to 2000 m$^2$/g in specific surface area.

In an embodiment of this application, the two-dimensional conductive material is 2 $\mu$m to 10 $\mu$m in length, 6 nm to 20 $\mu$m in thickness, and 0.5 m$^2$/g to 1000 m$^2$/g in specific surface area.

In an embodiment of this application, the current collector satisfies at least one of the following features:

(a) the electron resistivity of the current collector in the X-Y in-plane direction is 50 $\Omega$·cm to 1000 $\Omega$·cm;
(b) the electron resistivity of the current collector in the Z direction is 0.01 $\Omega$·cm to 1 $\Omega$·cm;
(c) a ratio of the electron resistivity of the current collector in the X-Y in-plane direction to the electron resistivity of the current collector in the Z direction is 100 to 1000;
(d) an angle between the conductive material and the Z direction is 0° to 10°;
(e) a thickness of the current collector is 5 $\mu$m to 50 $\mu$m; and
(f) a weight percent of the conductive material in a mass of the current collector is 20% to 60%.

In an embodiment of this application, the current collector satisfies at least one of the following features:

(a) the electron resistivity of the current collector in the X-Y in-plane direction is 100 $\Omega$·cm to 1000 $\Omega$·cm;
(b) the electron resistivity of the current collector in the Z direction is 0.01 $\Omega$·cm to 0.05 $\Omega$·cm;

(c) a ratio of the electron resistivity of the current collector in the X-Y in-plane direction to the electron resistivity of the current collector in the Z direction is 200 to 600;

(d) a thickness of the current collector is 5 $\mu$m to 20 $\mu$m;

(e) a weight percent of the conductive material in a mass of the current collector is 40% to 50%; and

(f) a tensile strength of the current collector is 80 MPa to 100 MPa.

In an embodiment of this application, the conductive material includes at least one of a carbon material or a metal material.

In an embodiment of this application, the carbon material includes at least one of single-walled carbon nanotubes, multi-walled carbon nanotubes, conductive carbon fibers, conductive carbon black, fullerene, conductive graphite, or graphene.

In an embodiment of this application, the metal material includes at least one of Ni, Ti, Ag, Au, Pt, or stainless steel, or an alloy thereof.

In an embodiment of this application, the polymer substrate material includes at least one of polyethylene terephthalate, polybutylene terephthalate, polyethylene naphthalate, polyether ether ketone, polyimide, polyamide, polyethylene glycol, polyamide imide, polycarbonate, cyclic polyolefin, polyphenylene sulfide, polyvinyl acetate, polytetrafluoroethylene, polymethylene naphthalene, polyvinylidene difluoride, polyethylene naphthalate, polypropylene carbonate, poly(vinylidene difluoride-co-hexafluoropropylene), poly(vinylidene difluoride-co-chlorotrifluoroethylene), organosilicon resin, vinylon, polypropylene, polyethylene, polyvinyl chloride, polystyrene, polyether nitrile, polyurethane, polyphenylene ether, polysulfone, or a derivative thereof.

A second aspect of this application provides an electrochemical device, including at least two electrode assemblies and the current collector according to any one of the embodiments described above. The current collector is located between the two electrode assemblies.

A third aspect of this application provides an electronic device, including the electrochemical device according to the second aspect.

In this application, the term "orientation angle" represents an angle between a length direction of the one-dimensional conductive material or a plane direction of the two-dimensional conductive material and the Z direction of the current collector.

The term "unidirectional conduction ratio" is expressed as: $((R2-R1)\times H)/(R0\times(L2-L1))$, where R0 is an impedance between two metallic cylindrical electrodes that are directly opposite to two sides of an X-Y plane of a specimen, L1 is a distance between a destination point and an original point of a metallic cylindrical electrode that is translated along the X-Y plane for a first time, R1 is an impedance between the two metallic cylindrical electrodes that have been translated for the first time, L2 is a distance between a destination point and an original point of the same metallic cylindrical electrode that is translated along the X-Y plane for a second time, R2 is an impedance between the two metallic cylindrical electrodes that have been translated for the second time, and H is a thickness of the specimen.

In the current collector, the electrochemical device containing the current collector, and the electronic device according to this application, on the one hand, the polymer substrate material in the current collector is excellent in oxidation resistance, reduction resistance, ionic insulation, mechanical strength, and thermal stability, and the electron resistivity of the current collector in the Z direction is 0.01 $\Omega\cdot$cm to 30 $\Omega\cdot$cm. Therefore, a bipolar electrochemical device with the current collector according to this application achieves excellent electron conductivity in the Z direction. In addition, the electron resistivity of the current collector in the X-Y in-plane direction is 10 $\Omega\cdot$cm to 1000 $\Omega\cdot$cm. Therefore, the overall current density distribution in the X-Y plane is more uniform, thereby improving the charge-and-discharge consistency between different positions of an electrode plate and further facilitating long-term stable cycling of the electrochemical device. On the other hand, the density of the polymer substrate material is lower, thereby reducing the content of inactive substances of the entire bipolar electrochemical device, and increasing the energy density of the bipolar electrochemical device. Compared with the existing metal foil current collector, the current collector according to this application is more cost-effective and more suitable for mass production. Moreover, this application implements high-voltage output of a stand-alone electrochemical device. Compared with the existing practice in which a plurality of electrochemical cells are connected in series into one electrochemical device, this application saves some packaging materials, reduces the size and weight, increases the energy density, simplifies the overall manufacturing process of the electrochemical device, and reduces the manufacturing cost.

## BRIEF DESCRIPTION OF DRAWINGS

To describe the technical solutions in this application or the prior art more clearly, the following outlines the drawings to be used in some embodiments of this application or the prior art. Evidently, the drawings outlined below are merely about some embodiments of this application, and a person of ordinary skill in the art may derive other technical solutions from the drawings without making any creative effort.

FIG. 1 is a schematic diagram of a current collector according to an embodiment of this application;
FIG. 2 is a schematic diagram of a current collector according to another embodiment of this application;
FIG. 3 is a schematic diagram of an electrochemical device according to an embodiment of this application;
FIG. 4 is a schematic diagram of an electron resistivity of a bipolar current collector in an X-Y in-plane direction measured by a four-point probe method according to this application; and
FIG. 5 is a schematic diagram of measuring a unidirectional conduction ratio of a bipolar current collector according to this application.

## DETAILED DESCRIPTION OF EMBODIMENTS

To make the objectives, technical solutions, and advantages of this application clearer, the following describes this application in further detail with reference to drawings and embodiments. Evidently, the described embodiments are merely a part of but not all of the embodiments of this application. All other technical solutions derived by a person of ordinary skill in the art based on the embodiments of this application without making any creative effort still fall within the protection scope of this application.

It is hereby noted that in specific embodiments of this application, this application is construed by using a lithium-ion battery as an example of the electrochemical device, but the electrochemical device according to this application is not limited to the lithium-ion battery.

As a new type of lithium-ion battery, a bipolar lithium-ion battery forms a stand-alone lithium-ion battery by internal series connection of a plurality of battery cells, thereby increasing the output voltage of the lithium-ion battery. The current collector used in such a lithium-ion battery is a bipolar current collector. One side of the bipolar current collector contacts a positive active material, and the other side contacts a negative active material. This requires the current collector to be resistant to oxidation and reduction. Therefore, a bipolar current collector is usually a metal foil such as aluminum-copper composite foil. However, the existing bipolar lithium-ion battery typically encounters the following problems: On the one hand, due to poor intermetallic interfacial bonding, the aluminum-copper composite foil is not conducive to the cycling stability of the bipolar lithium-ion battery. On the other hand, the metal foil is expensive, and increases the manufacturing cost of the bipolar lithium-ion battery.

In addition, the existing bipolar current collector may be a multi-layer metallic composite current collector, which is usually formed by directly compounding a copper foil and an aluminum foil. Such a current collector is resistant to oxidation and reduction to some extent, but incurs problems such as poor intermetallic interfacial bonding and difficulty of thinning.

In view of this, this application provides a current collector. The current collector includes a polymer substrate material and a conductive material. An electron resistivity of the current collector in an X-Y in-plane direction is 10 $\Omega \cdot$cm to 1000 $\Omega \cdot$cm. Without being limited to any theory, such a technical solution implements uniform distribution of the overall current density in the X-Y plane of the current collector, and in turn, achieves high charge-and-discharge consistency between different positions of the electrode plate, thereby facilitating long-term stable cycling of the lithium-ion battery. The electron resistivity of the current collector in a Z direction is 0.01 $\Omega \cdot$cm to 30 $\Omega \cdot$cm, thereby achieving excellent electron conductivity of the current collector in the Z direction.

In this application, the polymer substrate material may be a film, and specifically, may be a film made of a polymer material. The polymer substrate material will be described in detail below. The Z direction is the thickness direction of the current collector, the X-Y plane is a plane perpendicular to the Z direction, and the X-Y in-plane direction is any direction perpendicular to the Z direction and parallel to the X-Y plane.

In an embodiment of this application, a weight percent of the conductive material in a mass of the current collector is 10% to 70%, preferably 20% to 60%, and further preferably 40% to 50%.

In an embodiment of this application, the conductive material may include at least one of a one-dimensional conductive material or a two-dimensional conductive material. An angle between a length direction of the one-dimensional conductive material or a plane direction of the two-dimensional conductive material and the Z direction of the current collector is 0° to 30°, that is, the orientation angle of the conductive material is 0° to 30°.

In this application, the one-dimensional conductive material may be a strip-shaped or rod-shaped conductive material, and the two-dimensional conductive material may be a sheet-shaped conductive material. When the angle between the length direction of the one-dimensional conductive material or the plane direction of the two-dimensional conductive material and the Z direction of the current collector is 0° to 30°, the current collector can achieve excellent electron conductivity in the Z direction, and the current collector can achieve a relatively low electron conductivity in the X-Y plane direction. In this way, the overall current density distribution of the current collector in the X-Y plane is more uniform, and the charge-and-discharge consistency between different positions of the electrode plate is higher.

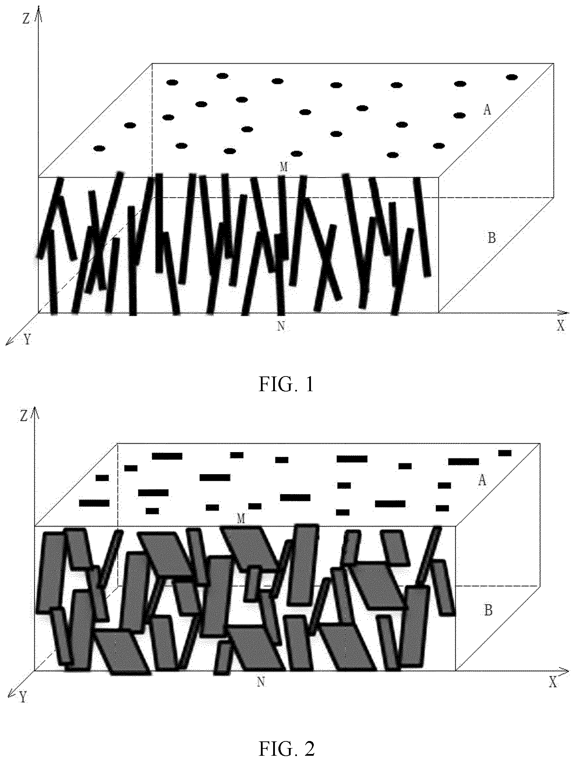

FIG. 1 is a schematic diagram of a current collector according to an embodiment of this application. As shown in FIG. 1, the one-dimensional conductive material may be embedded in the polymer substrate material. In addition, the angle between the length direction of the one-dimensional conductive material and the Z direction of the current collector is 0° to 30°, preferably 0° to 10°, and further preferably 3° to 10°.

FIG. 2 is a schematic diagram of a current collector according to another embodiment of this application. As shown in FIG. 2, the two-dimensional conductive material may also be embedded in the polymer substrate material. In addition, the angle between the length direction of the two-dimensional conductive material and the Z direction of the current collector is 0° to 30°, preferably 0° to 10°, and further preferably 3° to 10°.

In addition, one end or both ends of the one-dimensional conductive material or two-dimensional conductive material may be exposed on a surface of the polymer substrate material. The current collector includes two sides, denoted as side A and side B, as shown in FIG. 1 and FIG. 2. Understandably, at any point M of the side A of the current collector, the conductive material may be exposed from the polymer substrate material. Therefore, at a peer point N on the side B of the current collector, the conductive material may also be exposed from the polymer substrate material. The point M and the point N are connected by the conductive material in the polymer substrate material, thereby implementing electron connection between the side A and the side B of the current collector. The conductive material in the polymer substrate material may be a one-dimensional or two-dimensional conductive material that runs through the polymer substrate material. Alternatively, electron connection is formed between the side A and the side B after a plurality of one-dimensional or two-dimensional conductive materials are connected to each other.

In an embodiment of this application, a ratio of the electron resistivity of the current collector in the X-Y in-plane direction to the electron resistivity of the current collector in the Z direction is 5 to 4000. In this way, the current collector achieves excellent electron conductivity in the Z direction, and the current collector achieves a relatively low electron conductivity in the X-Y plane direction, so that the overall current density distribution of the current collector in the X-Y plane is uniform.

In an embodiment of this application, a unidirectional conduction ratio of the current collector is 5.4 to 4240. In this way, the current collector achieves excellent electron conductivity in the Z direction, and the current collector achieves a relatively low electron conductivity in the X-Y plane direction, so that the overall current density distribution of the current collector in the X-Y plane is uniform.

The thickness of the current collector is not particularly limited in this application, as long as the invention objectives of this application can be achieved. In an embodiment of this application, the thickness of the current collector may be 2 $\mu$m to 500 $\mu$m, preferably 5 $\mu$m to 50 $\mu$m, and further preferably, 5 $\mu$m to 20 $\mu$m.

In an embodiment of this application, the electron resistivity of the current collector in the X-Y in-plane direction is preferably 50 $\Omega\cdot$cm to 1000 $\Omega\cdot$cm, and further preferably 100 $\Omega\cdot$cm to 1000 $\Omega\cdot$cm, so that the overall current density distribution of the current collector in the X-Y plane is more uniform. The electron resistivity of the current collector in the Z direction is preferably 0.01 $\Omega\cdot$cm to 1 $\Omega\cdot$cm, and further preferably 0.01 $\Omega\cdot$cm to 0.05 $\Omega\cdot$cm, so that the current collector achieves more excellent electron conductivity in the Z direction.

In an embodiment of this application, a ratio of the electron resistivity of the current collector in the X-Y in-plane direction to the electron resistivity of the current collector in the Z direction is preferably 100 to 1000, and further preferably 200 to 600. In this way, the current collector achieves more excellent electron conductivity in the Z direction, and the current collector achieves a relatively low electron conductivity in the X-Y plane direction, so that the overall current density distribution of the current collector in the X-Y plane is more uniform.

The dimensions of the one-dimensional conductive material are not particularly limited in this application, as long as the invention objectives of this application can be achieved. For example, the one-dimensional conductive material is 0.1 $\mu$m to 200 $\mu$m in length, 2 nm to 500 nm in diameter, and 5 m$^2$/g to 2000 m$^2$/g in specific surface area.

For example, in the one-dimensional conductive materials, the carbon nanotubes are usually 2 nm to 30 nm in diameter, 0.1 nm to 200 $\mu$m in length, and 100 m$^2$/g to 2000 m$^2$/g in specific surface area; and the conductive carbon fibers (VGCF) are usually 30 nm to 500 nm in diameter, 0.5 $\mu$m to 50 $\mu$m in length, and 5 m$^2$/g to 100 m$^2$/g in specific surface area.

The dimensions of the two-dimensional conductive material are not particularly limited in this application, as long as the invention objectives of this application can be achieved. For example, the two-dimensional conductive material is 2 $\mu$m to 10 $\mu$m in length, 6 nm to 20 $\mu$m in thickness, and 0.5 m$^2$/g to 1000 m$^2$/g in specific surface area.

For example, among the two-dimensional conductive material, graphene possesses an average length of 50 nm to 20 $\mu$m, usually includes 1 to 15 sheet layers so that the thickness of the graphene material is calculated as 0.4 nm to 6 nm, and possesses a specific surface area of 10 m$^2$/g to 1000 m$^2$/g; and a conductive graphite sheet is 0.3 $\mu$m to 20 $\mu$m in thickness, 2 $\mu$m to 10 $\mu$m in diameter, and 0.5 m$^2$/g to 10 m$^2$/g in specific surface area.

The conductive material is not particularly limited in this application, as long as the invention objectives of this application can be achieved. For example, the conductive material may include at least one of a carbon material or a metal material. In addition, the conductive material according to this application is of high conductivity, and possesses an electron resistivity that is usually less than 10$^{-4}$ $\Omega\cdot$m.

The carbon material is not particularly limited in this application, as long as the invention objectives of this application can be achieved. For example, the carbon material may include at least one of single-walled carbon nanotube, multi-walled carbon nanotube, conductive carbon fiber, conductive carbon black (such as acetylene black), fullerene, conductive graphite, or graphene.

The metal material is not particularly limited in this application, as long as the invention objectives of this application can be achieved. For example, the metal material may include at least one of Ni, Ti, Ag, Au, Pt, or stainless steel, or an alloy thereof. Moreover, the metal material may be a one-dimensional or two-dimensional material, as long as the physical form thereof is changed. For example, the one-dimensional metal material may be a stripe-shaped metal of Ni, Ti, or the like; and the two-dimensional metal material may be a sheet-shaped (or panel-shaped) metal of Ni, Ti, or the like.

The polymer substrate material is not particularly limited in this application, as long as the invention objectives of this application can be achieved. For example, the polymer substrate material may include at least one of polyethylene terephthalate, polybutylene terephthalate, polyethylene naphthalate, polyether ether ketone, polyimide, polyamide, polyethylene glycol, polyamide imide, polycarbonate, cyclic polyolefin, polyphenylene sulfide, polyvinyl acetate, polytetrafluoroethylene, polymethylene naphthalene, polyvinylidene difluoride, polyethylene naphthalate, polypropylene carbonate, poly(vinylidene difluoride-co-hexafluoropropylene), poly(vinylidene difluoride-co-chlorotrifluoroethylene), organosilicon resin, vinylon, polypropylene, polyethylene, polyvinyl chloride, polystyrene, polyether nitrile, polyurethane, polyphenylene ether, polysulfone, or a derivative thereof. Understandably, the polymer substrate material itself is ionically inert, that is, hardly penetrable to ions.

In an embodiment of this application, the tensile strength of the current collector is 80 MPa to 100 MPa, and the mechanical strength of the current collector is excellent, so that a bipolar lithium-ion battery containing the current collector is of high safety.

Compared with the existing current collector, the current collector of this application achieves the following beneficial effects:

The electron resistivity of the current collector of this application in the X-Y in-plane direction is 10 $\Omega\cdot$cm to 1000 $\Omega\cdot$cm, and the electron resistivity of the current collector in the Z direction is 0.01 $\Omega\cdot$cm to 30 $\Omega\cdot$cm. Therefore, the lithium-ion battery containing the current collector of this application achieves excellent electron conductivity in the Z direction, and the overall current density distribution in the X-Y plane is more uniform. In this way, the charge-and-discharge consistency between different positions of the electrode plate is higher, and the long-term stable cycling of the lithium-ion battery is further facilitated.

The density of the polymer substrate material in the current collector of this application is lower than that of the metal current collector. Therefore, the current collector of this application reduces the percentage of the overall inactive materials in the bipolar lithium-ion battery, thereby increasing the energy density of the bipolar electrochemical device.

Compared with the existing metal current collector, the current collector of this application is less likely to generate electrically conductive scraps in a case of mechanical abuse such as nail penetration, impact, and extrusion, and is more effective in wrapping a mechanically broken surface, and therefore, can improve a safety limit in the case of mechanical abuse, and improve the safety of the bipolar lithium-ion battery.

Compared with the existing metal current collectors such as the existing stainless steel current collector or titanium current collector, the current collector of this application is more cost-effective and more suitable for mass production.

This application further provides an electrochemical device, including at least two electrode assemblies and the current collector according to any one of the embodiments described above. The current collector is located between the two electrode assemblies. In this way, at least two electrode assemblies can be internally connected in series by a bipolar electrode that contains the current collector of this application, so as to form a bipolar lithium-ion battery to provide a higher working voltage.

In an embodiment of this application, the electrochemical device includes at least two electrode assemblies and the current collector according to any one of the embodiments described above. The current collector is located between the two electrode assemblies, and tabs may be led out of the current collector. The lead-out tabs are configured to monitor the voltage of the electrochemical device.

In an embodiment of this application, the electrochemical device includes at least two electrode assemblies and a bipolar electrode plate. The bipolar electrode plate is located between the two electrode assemblies. The bipolar electrode plate includes: the current collector according to any one of the embodiments described above, and a positive active material layer and a negative active material layer that are applied to two sides of the current collector respectively.

The bipolar electrode plate may be formed by applying the positive active material and the negative active material on two sides of the current collector respectively, so that the electrochemical device contains a larger amount of electrode active materials to increase the energy density of the electrochemical device.

In an embodiment of this application, the electrochemical device includes at least two electrode assemblies and a bipolar electrode plate. The bipolar electrode plate is located between the two electrode assemblies. The bipolar electrode plate includes: the current collector according to any one of the embodiments described above, an undercoat applied to two sides of the current collector separately, and a positive active material layer and a negative active material layer that are applied to the two sides of the current collector respectively.

The undercoat serves to improve the performance of bonding between the current collector and the active material, and improve the electron conductivity between the current collector and the active material.

The undercoat is usually formed by coating the current collector with a slurry and then drying the slurry, where the slurry is formed by mixing conductive carbon black and styrene butadiene rubber in deionized water. In addition, the undercoats on the two sides of the bipolar current collector may be the same or different. The processes of preparing the positive active material layer, the negative active material layer, the positive undercoat, and the negative undercoat will be described later in specific embodiments.

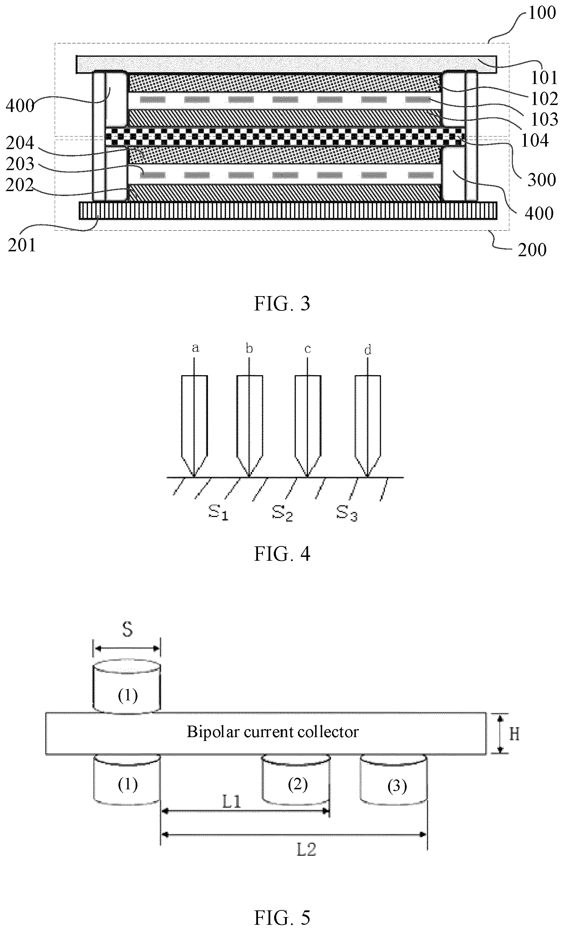

FIG. 3 is a schematic diagram of an electrochemical device according to an embodiment of this application. As shown in FIG. 3, a bipolar current collector 300 partitions the electrochemical device into two electrode assemblies: a first electrode assembly 100 and a second electrode assembly 200. The first electrode assembly 100 includes a negative electrode 101, a first negative active material layer 102, a first separator 103, a first positive active material layer 104, and a part of the bipolar current collector 300, which are arranged in sequence from top downward, as shown in FIG. 3. The second electrode assembly 200 includes a positive electrode 201, a second positive active material layer 202, a second separator 203, a second negative active material layer 204, and another part of the bipolar current collector 300, which are arranged in sequence from bottom upward, as shown in FIG. 3. Further, the electrochemical device may be sealed by a sealing element 400, so that the electrochemical device forms two independent cavity structures. The two cavities correspond to the first electrode assembly 100 and the second electrode assembly 200 respectively.

This application further provides an electronic device. The electronic device includes the electrochemical device according to an embodiment of this application.

In the electrochemical device according to this application, a partition plate between the electrode assemblies may be the current collector according to this application. Definitely, the current collector inside each electrode assembly may also be the current collector according to this application. The partition plate referred to herein may be an isolation unit between two electrode assemblies.

The positive electrode plate is not particularly limited in this application, as long as the objectives of this application can be achieved. For example, the positive electrode plate typically includes a positive current collector and a positive active material. The positive current collector is not particularly limited, and may be any positive current collector well known in the art. For example, the positive current collector may be an aluminum foil, an aluminum alloy foil, or a composite current collector. The positive active material is not particularly limited, and may be any positive active material in the prior art. The active material includes at least one of NCM811, NCM622, NCM523, NCM111, NCA, lithium iron phosphate, lithium cobalt oxide, lithium manganese oxide, lithium manganese iron phosphate, or lithium titanium oxide.

The negative electrode plate is not particularly limited in this application, as long as the objectives of this application can be achieved. For example, the negative electrode plate typically includes a negative current collector and a negative active material layer. The negative current collector is not particularly limited, and may be any negative current collector known in the art, for example, a copper foil, an aluminum foil, an aluminum alloy foil, or a composite current collector. The negative active material layer includes a negative active material. The negative active material is not particularly limited, and may be any negative active material known in the art. For example, the negative active material layer may include at least one of artificial graphite, natural graphite, mesocarbon microbeads, soft carbon, hard carbon, silicon, silicon-carbon compound, lithium titanium oxide, or the like.

The electrolytic solution is not particularly limited in this application, and may be any electrolytic solution well known in the art. For example, the electrolytic solution may be in a gel state, solid state, or liquid state. For example, the liquid-state electrolytic solution may include a lithium salt and a nonaqueous solvent.

The lithium salt is not particularly limited, and may be any lithium salt well known in the art, as long as the objectives of this application can be achieved. For example, the lithium salt includes at least one of lithium hexafluorophosphate ($LiPF_6$), lithium tetrafluoroborate ($LiBF_4$), lithium difluorophosphate ($LiPO_2F_2$), lithium bistrifluoromethanesulfonimide $LiN(CF_3SO_2)_2$ (LiTFSI), lithium bis(fluorosulfonyl)imide $Li(N(SO_2F)_2)$ (LiFSI), lithium bis(oxalate) borate $LiB(C_2O_4)_2$ (LiBOB), or lithium difluoro(oxalate)borate $LiBF_2(C_2O_4)$ (LiDFOB). For example, the lithium salt may be $LiPF_6$.

The nonaqueous solvent is not particularly limited, as long as the objectives of this application can be achieved. For example, the nonaqueous solvent may include at least one of a carbonate compound, a carboxylate compound, an ether compound, a nitrile compound, or another organic solvent.

For example, the carbonate compound may include at least one of diethyl carbonate (DEC), dimethyl carbonate (DMC), ethyl methyl carbonate (EMC), dipropyl carbonate (DPC), methyl propyl carbonate (MPC), ethylene propyl carbonate (EPC), ethyl methyl carbonate (MEC), ethylene carbonate (EC), propylene carbonate (PC), butylene carbonate (BC), vinyl ethylene carbonate (VEC), fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate.

The separator is not particularly limited in this application. For example, the separator includes a polymer, inorganic compound, or the like formed from a material that is stable to the electrolytic solution according to this application.

For example, the separator may include a substrate material layer and a surface treatment layer. The substrate material layer may be a non-woven fabric, a film, or a composite film, which, in each case, is in a porous structure. The material of the substrate material layer may be at least one selected from polyethylene, polypropylene, polyethylene terephthalate, or polyimide. Optionally, the substrate layer may be a polypropylene porous film, a polyethylene porous film, a polypropylene non-woven fabric, a polyethylene non-woven fabric, or a polypropylene-polyethylene-polypropylene porous composite film. Optionally, the surface treatment layer is disposed on at least one surface of the substrate material layer. The surface treatment layer may be a polymer layer or an inorganic compound layer, or a layer formed by mixing a polymer and an inorganic compound.

For example, the inorganic compound layer includes inorganic particles and a binder. The inorganic particles are not particularly limited, and may be at least one selected from: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited, and may be one or more selected from polyvinylidene fluoride, vinylidene fluoride-hexafluoropropylene copolymer, polyamide, polyacrylonitrile, polyacrylate, polyacrylic acid, polyacrylic acid sodium salt, polyvinylpyrrolidone, polyvinyl ether, poly methyl methacrylate, polytetrafluoroethylene, or polyhexafluoropropylene. The polymer layer includes a polymer. The material of the polymer includes at least one of polyamide, polyacrylonitrile, an acrylate polymer, polyacrylic acid, polyacrylate, polyvinylpyrrolidone, polyvinyl ether, polyvinylidene fluoride, or poly(vinylidene fluoride-co-hexafluoropropylene).

This application further provides a method for preparing the current collector described in any one of the embodiments above. The method includes:

preparing a polymer material layer: spraying a layer of polymer material on a surface of a stainless steel base plate by electrostatic spraying, where a thickness of the polymer material layer is 2 $\mu$m to 800 $\mu$m;

heating the polymer material layer: heating the prepared polymer material layer until 250 °C to 300 °C to soften the polymer material layer;

implanting a conductive material: performing an electrostatic flocking process to implant a one-dimensional or two-dimensional conductive material into the polymer material layer in a direction perpendicular to the surface of the polymer material layer, and keeping the polymer material layer in the softened state;

hot calendering the polymer material layer: hot calendering the polymer material layer so that the surface of the polymer material layer is smooth and consistent in thickness, where the calendering temperature is 10 °C to 20°C higher than the heating temperature, and the thickness of the calendered polymer material layer is 2 $\mu$m to 500 $\mu$m; and

preparing a current collector: scraping off the obtained polymer material layer from the surface of the stainless steel base plate by using a scraper, and performing rewinding to obtain a current collector.

In an embodiment of this application, another layer of polymer material may be electrostatically sprayed onto the surface of the prepared polymer material layer in which a conductive material has been implanted, and the polymer material layer is kept in a softened state and then hot calendered. The purpose of spraying another layer of polymer material is to embed the conductive material into the polymer material layer more effectively. Definitely, the thickness of this layer of polymer material may be reasonably controlled so that the end of the conductive material is exposed out of the polymer material layer.

The electrostatic flocking process is not particularly limited in this application, as long as the invention objectives of this application can be achieved. For example, during electrostatic flocking, strength of an external electric field is 5 kV to 500 kV, so as to control the speed of injecting the conductive material into the polymer material layer (the larger the external electric field, the higher the speed of injecting the conductive material). After the conductive material enters the polymer material layer from one side of the polymer material layer, an "incident end" of the conductive material is exposed from the other side of the polymer film.

The electrostatic spraying process is not particularly limited in this application, as long as a layer of polymer material can be formed. The current collector prepared according to this application may serve as a bipolar current collector for use in a bipolar electrode plate. The electrode assembly is not particularly limited in this application, and may be any electrode assembly in the prior art, as long as the objectives of this application can be achieved. For example, the electrode assembly is a stacked electrode assembly or a jelly-roll electrode assembly. The electrode assembly typically includes a positive electrode plate, a negative electrode plate, and a separator.

The implementations of this application are described below in more detail with reference to embodiments and comparative embodiments. Various tests and evaluations are performed by the following methods. In addition, unless otherwise specified, "fraction" and "%" mean a percent by weight.

**Embodiment 1**

**<Preparing a bipolar electrode plate>**

**<Preparing a bipolar current collector>**

Step a: Electrostatically spray a layer of polyethylene terephthalate (PET) particles on a surface of a stainless steel base plate, where the thickness of the PET layer is 20 $\mu$m.

Step b: Heat the prepared PET layer until 260 °C to soften the PET layer.

Step c: Perform an electrostatic flocking process to implant a one-dimensional conductive material, multi-walled carbon nanotubes (MWCNT), into the PET layer in a direction perpendicular to the surface of the PET layer, and keep the temperature at 260 °C to leave the PET layer in a softened state. Strength of an external electric field is 50 kV during the electrostatic flocking.

Step d: Electrostatically spray another layer of PET particles on the surface of the PET layer prepared in step c in which the conductive material has been implanted, and keep the temperature at 260 °C to leave the PET layer in the softened state, where the thickness of the PET layer obtained after the electrostatic spraying is 30 $\mu$m.

Step e: Hot calender the PET layer obtained in step d so that the surface of the PET layer is smooth and consistent in thickness, where the calendering temperature is 270 °C.

Step f: Scrape off, by using a scraper, the PET layer obtained in step e from the surface of the stainless steel base plate, and perform rewinding to obtain a bipolar current collector. The orientation angle of the conductive material of the current collector is 5°. The weight percent of the conductive material in the mass of the current collector is 30%, and the thickness is 20 $\mu$m.

**<Preparing a negative active material layer in a bipolar electrode plate>**

Mixing graphite (Graphite) as a negative active material, conductive carbon black (Super P), and styrene butadiene rubber (SBR) at a weight ratio of 96: 1.5: 2.5, and then adding deionized water ($H_2O$) as a solvent, blending the mixture to form a slurry with a solid content of 70%, and stirring well. Coating one surface of the bipolar current collector with the slurry evenly, and drying the current collector at 110 °C to obtain a negative active material layer that is 130 $\mu$m in thickness.

**<Preparing a positive active material layer in a bipolar electrode plate>**

Mixing lithium cobalt oxide ($LiCoO_2$) as a positive active material, conductive carbon black (super P), and polyvinylidene difluoride (PVDF) at a weight ratio of 97.5: 1.0: 1.5, adding N-methylpyrrolidone (NMP) as a solvent, blending the mixture to form a slurry with a solid content of 75%, and stirring well. Coating the other surface of the bipolar current collector with the slurry evenly, and drying the current collector at 90 °C to obtain a positive active material layer that is 110 $\mu$m in thickness.

Upon completion of the foregoing steps, a bipolar electrode plate is obtained. Cutting the electrode plate into a size of 41 mm $\times$ 61 mm for future use.

**<Preparing a negative electrode plate>**

Mixing graphite (Graphite) as a negative active material, conductive carbon black (Super P), and styrene butadiene rubber (SBR) at a weight ratio of 96: 1.5: 2.5, and then adding deionized water as a solvent. Blending the mixture to form a slurry with a solid content of 70%, and stirring well. Coating one surface of a 10-$\mu$m-thick copper foil with the slurry evenly, and drying the copper foil at a temperature of 110 °C to obtain a negative electrode plate coated with a 150-$\mu$m-thick negative active material layer on a single side, and then repeating the foregoing coating steps on the other surface of the negative electrode plate to obtain a negative electrode plate coated with the negative active material layer on both sides. Cutting the negative electrode plate into a size of 41 mm $\times$ 61 mm, welding tabs, and leaving the negative electrode plate ready for future use.

**<Preparing a positive electrode plate>**

Mixing lithium cobalt oxide ($LiCoO_2$) as a positive active material, conductive carbon black (Super P), and PVDF at a weight ratio of 97.5: 1.0: 1.5, adding NMP as a solvent, blending the mixture to form a slurry with a solid content of 75%, and stirring well. Coating one surface of a 12-$\mu$m-thick aluminum foil with the slurry evenly, and drying the aluminum foil at a temperature of 90 °C to obtain a positive electrode plate coated by a thickness of 100 $\mu$m, and then repeating

the foregoing steps on the other surface of the positive electrode plate to obtain a positive electrode plate coated with the positive active material layer on both sides. Cutting the positive electrode plate into a size of 38 mm $\times$ 58 mm, welding tabs, and leaving the positive electrode plate ready for future use.

**<Preparing an electrolytic solution>**

Mixing ethylene carbonate (EC), ethyl methyl carbonate (EMC), and diethyl carbonate (DEC) at a weight ratio of 30: 50: 20 in an dry argon atmosphere to obtain an organic solvent, adding lithium hexafluorophosphate (LiPF$_6$) into the organic solvent to dissolve, and stirring well to obtain an electrolytic solution in which a molar concentration of LiPF$_6$ is 1.15 mol/L.

**<Preparing electrode assemblies>**

**<Preparing a first electrode assembly>**

Using a 15-$\mu$m-thick polyethylene (PE) film as a separator. Placing a positive electrode plate on each side of the negative electrode plate separately, and placing a layer of separator between the positive electrode plate and the negative electrode plate to form a stacked structure, and then fixing four corners of the entire stacked structure to obtain a first electrode assembly.

**<Preparing a second electrode assembly>**

Using a 15-$\mu$m-thick polyethylene (PE) film as a separator. Placing a negative electrode plate on each side of the positive electrode plate separately, and placing a layer of separator between the positive electrode plate and the negative electrode plate to form a stacked structure, and then fixing four corners of the entire stacked structure to obtain a second electrode assembly.

**<Preparing a bipolar lithium-ion battery>**

**<Preparing a bipolar electrode assembly>**

Placing a punch-molded 90-$\mu$m-thick aluminum-plastic film with the pit side facing upward. Putting the first electrode assembly into the pit of the aluminum plastic film so that the positive electrode plate of the first electrode assembly faces upward. Subsequently, with the negative active material layer of the bipolar electrode plate facing downward, putting the bipolar electrode plate on the first electrode assembly so that the positive electrode plate of the first electrode assembly corresponds to the negative active material layer of the bipolar electrode plate. Compacting the structure to obtain a first assembled piece.

Leaving the positive active material layer of the bipolar electrode plate of the first assembled piece to face upward, leaving a negative electrode plate of a second electrode assembly to face downward, and putting the second electrode assembly on the bipolar electrode plate so that the negative electrode plate of the second electrode assembly corresponds to the positive active material layer of the bipolar electrode plate. Subsequently, using another punch-molded 90-$\mu$m-thick aluminum plastic film to overlay the second electrode assembly, with the pit side facing downward. Heat-sealing the two aluminum plastic films by hot pressing so that the first electrode assembly is separated from the second electrode assembly by the bipolar electrode plate, so as to obtain a bipolar electrode assembly. The bipolar electrode assembly contains two independent cavities. The first electrode assembly corresponds to a first cavity, and the second electrode assembly corresponds to a second cavity.

**<Injecting an electrolytic solution and sealing the electrode assembly>**

Injecting an electrolytic solution into the two cavities of the bipolar electrode assembly separately, and then sealing the electrode assembly. Electrically connecting the positive tab in the first cavity to the negative tab in the second cavity in series to obtain a bipolar lithium-ion battery. No ions are exchanged between the two cavities of the bipolar lithium-ion battery.

**Embodiments 2 to 3**

Identical to Embodiment 1 except that the orientation angle of the conductive material is 10° and 20° separately.

**Embodiment 4**

Identical to Embodiment 1 except that the orientation angle of the conductive material is 30° and the weight percent of the conductive material in the mass of the current collector is 10%.

**Embodiment 5**

Identical to Embodiment 1 except that the orientation angle of the conductive material is 3° and the weight percent of the conductive material in the mass of the current collector is 70%.

**Embodiment 6**

Identical to Embodiment 1 except that the orientation angle of the conductive material is 3° and the weight percent of the conductive material in the mass of the current collector is 10%.

**Embodiment 7**

Identical to Embodiment 1 except that the orientation angle of the conductive material is 30° and the weight percent of the conductive material in the mass of the current collector is 70%.

**Embodiment 8**

Identical to Embodiment 2 except that the conductive material is graphene.

**Embodiment 9**

Identical to Embodiment 2 except that the conductive material is VGCF.

**Embodiment 10**

Identical to Embodiment 2 except that the polymer material is polyethylene naphthalate (PEN).

**Embodiment 11**

Identical to Embodiment 2 except that the polymer material is polybutylene terephthalate (PBT).

**Embodiment 12**

Identical to Embodiment 2 except that the thickness of the bipolar current collector is 500 $\mu$m.

**Embodiment 13**

Identical to Embodiment 2 except that the thickness of the bipolar current collector is 2 $\mu$m.

**Embodiment 14**

Identical to Embodiment 2 except that the thickness of the bipolar current collector is 10 $\mu$m.

**Embodiment 15**

Identical to Embodiment 14 except that the weight percent of the conductive material in the mass of the current collector is 50%.

**Embodiment 16**

Identical to Embodiment 15 except that a negative undercoat and a positive undercoat are added into the bipolar electrode plate.

**<Preparing a negative undercoat in a bipolar electrode plate>**

Mixing conductive carbon black (Super P) and styrene butadiene rubber (SBR) at a weight ratio of 95: 5, adding deionized water ($H_2O$) as a solvent, blending the mixture to form a slurry with a solid content of 80%, and stirring well. Coating one surface of the bipolar current collector with the slurry evenly, and drying the current collector at 110 °C to obtain a negative undercoat that is 5 $\mu$m in thickness.

**<Preparing a negative active material layer in a bipolar electrode plate>**

Mixing graphite (Graphite) as a negative active material, conductive carbon black (Super P), and styrene butadiene rubber (SBR) at a weight ratio of 96: 1.5: 2.5, and then adding deionized water ($H_2O$) as a solvent, blending the mixture to form a slurry with a solid content of 70%, and stirring well. Coating the negative undercoat with the slurry evenly, and drying the slurry at 110 °C to obtain a negative active material layer that is 120 $\mu$m in thickness.

**<Preparing a positive undercoat in a bipolar electrode plate>**

Mixing conductive carbon black (Super P) and styrene butadiene rubber (SBR) at a weight ratio of 97: 3, adding deionized water ($H_2O$) as a solvent, blending the mixture to form a slurry with a solid content of 85%, and stirring well. Coating the other surface of the bipolar current collector with the slurry evenly, and drying the current collector at 110 °C to obtain a positive undercoat.

**<Preparing a positive active material layer in a bipolar electrode plate>**

Mixing lithium cobalt oxide ($LiCoO_2$) as a positive active material, conductive carbon black (super P), and polyvinylidene difluoride (PVDF) at a weight ratio of 97.5: 1.0: 1.5, adding N-methylpyrrolidone (NMP) as a solvent, blending the mixture to form a slurry with a solid content of 75%, and stirring well. Coating the positive undercoat with the slurry evenly, and drying the slurry at 90 °C to obtain a positive active material layer that is 100 $\mu$m in thickness.

Upon completion of the foregoing steps, a bipolar electrode plate is obtained. The thickness of the bipolar electrode plate is 245 $\mu$m. Cutting the electrode plate into a size of 41 mm $\times$ 61 mm for future use.

**Embodiment 17**

Identical to Embodiment 16 except that the process of preparing the negative undercoat and the positive undercoat is different from that in Embodiment 16.

**<Preparing a negative undercoat in a bipolar electrode plate>**

Mixing polypyrrole (PPy) and styrene butadiene rubber (SBR) at a weight ratio of 95: 5, adding deionized water ($H_2O$) as a solvent, blending the mixture to form a slurry with a solid content of 80%, and stirring well. Coating one surface of the bipolar current collector with the slurry evenly, and drying the current collector at 110 °C to obtain a negative undercoat that is 3 $\mu$m in thickness.

**<Preparing a positive undercoat in a bipolar electrode plate>**

Mixing polypyrrole (PPy) and styrene butadiene rubber (SBR) at a weight ratio of 97: 3, adding deionized water ($H_2O$) as a solvent, blending the mixture to form a slurry with a solid content of 85%, and stirring well. Coating the other surface of the bipolar current collector with the slurry evenly, and drying the current collector at 110 °C to obtain a positive undercoat.

**Embodiment 18**

Identical to Embodiment 16 except that the process of preparing the negative undercoat and the positive undercoat is different from that in Embodiment 16.

**<Preparing a negative undercoat in a bipolar electrode plate>**

Depositing a copper layer on one surface of the bipolar current collector by chemical vapor deposition (PVD), so as to obtain a negative undercoat that is 1 $\mu$m in thickness.

**<Preparing a positive active material layer in a bipolar electrode plate>**

Depositing an aluminum layer on the other surface of the bipolar current collector by PVD, so as to obtain a positive undercoat that is 1 $\mu$m in thickness.

**Embodiment 19**

Identical to Embodiment 17 except that the process of preparing the bipolar lithium-ion battery is different from that in Embodiment 17.

The process of preparing a bipolar lithium-ion battery is:
Stacking the first bipolar electrode plate, the first separator, the second bipolar electrode plate, and the second separator in sequence, where the positive active material layer of the first bipolar electrode plate is adjacent to the negative active material layer of the second bipolar electrode plate. Subsequently, applying a sealant around the electrode plate, and reserving an electrolytic solution injection port. Afterward, winding the stacked electrode plates and separator into an electrode assembly. Curing the sealant and performing top-and-side sealing, and then injecting an electrolytic solution into the electrode assembly. Upon completion of the injection, sealing the reserved electrolytic solution injection port to obtain a bipolar lithium-ion battery.

**Comparative Embodiment 1**

Identical to Embodiment 1 except that the bipolar current collector is a copper-aluminum foil composite current collector.

The thickness of the copper-aluminum composite current collector is 20 $\mu$m.

**Comparative Embodiment 2**

Identical to Embodiment 1 except that the bipolar current collector is a stainless steel foil current collector.

The thickness of the stainless steel foil current collector is 20 $\mu$m.

**Comparative Embodiment 3**

Identical to Embodiment 1 except that the bipolar current collector is compounded of a zero-dimensional conductive material and a polymer substrate material.

In the bipolar current collector, the zero-dimensional conductive material is dot-shaped carbon black particles, and the polymer substrate material is a PET substrate material. The dot-shaped carbon black particles are uniformly dispersed in a three-dimensionally arranged substrate without orientation. The thickness of the bipolar current collector is approximately 50 $\mu$m.

**Comparative Embodiment 4**

Identical to Embodiment 1 except that the bipolar current collector is compounded of a one-dimensional conductive material and a polymer substrate material.

In the bipolar current collector, the one-dimensional conductive material is MWCNTs, and the polymer substrate material is a PET substrate material. The MWCNTs are uniformly dispersed in a three-dimensionally arranged substrate without orientation. The thickness of the bipolar current collector is approximately 50 $\mu$m.

**Comparative Embodiment 5**

Identical to Embodiment 1 except that the bipolar current collector is compounded of a two-dimensional conductive material and a polymer substrate material.

In the bipolar current collector, the two-dimensional conductive material is graphene, and the polymer substrate material is a PET substrate material. The graphene is uniformly dispersed in a three-dimensionally arranged substrate without orientation. The thickness of the bipolar current collector is approximately 50 $\mu$m.

**Performance Test**

Performing the following methods to test the bipolar current collector and the bipolar lithium-ion battery that are prepared in each embodiment and each comparative embodiment.

**Testing the orientation angle of a conductive material in a bipolar current collector:**

Obtaining a scanning electron microscope (SEM) image of a cross section of a bipolar current collector, where the cross section of the bipolar current collector is obtained by plasma cutting and polishing. Measuring an angle between a fiber (one-dimensional conductive material) or nanosheet (two-dimensional conductive material) and the Z direction through the image, where the angle is determined as long as at least a half of the one-dimensional or two-dimensional conductive material in any image meets the angle requirements.

**Testing an electron resistivity in the Z direction in a bipolar current collector:**

Taking a 10 cm × 10 cm specimen of the bipolar current collector, and clamping the specimen of the current collector on the side A and the side B by using two fixed-area metallic clamping plates respectively, where the area of each clamping plate is the same as that of the bipolar current collector. Applying a voltage of 0.1 V between the two clamping plates, and measuring a current value between the two clamping plates. Subsequently, calculating a resistance value R, and then calculating an electron resistivity according to the following formula: $\rho = RS/L$. In the formula above, R represents the resistance value, S represents the area of the bipolar current collector, and L represents the thickness of the bipolar current collector.

**Testing an electron resistivity in the X-Y in-plane direction in a bipolar current collector:**

As shown in FIG. 4, measuring the electron resistivity by a four-point probe method: Arranging four metallic probe pins in a straight line on a surface of the bipolar current collector, and pressing the probe pins against the surface of the specimen by exerting a given pressure (typically 2 N). Measuring the current I that flows between the pins a and d, and measuring a voltage difference V generated between the pins b and c. Therefore, the electron resistivity of the material is:

$$\rho = C \times V/I$$

In the formula above, the probe coefficient is $C = \dfrac{20\pi}{\frac{1}{S_1} + \frac{1}{S_2} - \frac{1}{S_1+S_2} - \frac{1}{S_2+S_3}}$, where the spacing between the pins a and b, the spacing between the pins b and c, and the spacing between the pins c and d, are $S_1$, $S_2$, and $S_3$, respectively. After the probe coefficient C is obtained, the electron resistivity in the X-Y in-plane direction in the bipolar current collector can be determined.

**Testing the unidirectional conduction ratio of a bipolar current collector:**

Step A: As shown in FIG. 5, placing a metallic cylindrical electrode with an area S (the electrode (1) shown in the drawing, with an area S usually being approximately 1 cm$^2$) at each of opposite positions on two sides of the specimen of the bipolar current collector, and measuring the impedance between the two electrodes by using a multimeter, denoted as R0.

Step B: Translating one metallic cylindrical electrode by a distance L1 (to the position of the electrode (2) shown in the drawing), and measuring the impedance between the two electrodes by using a multimeter, where the impedance is denoted as R1, L1 is greater than 2000 H, and H is the thickness of the specimen.

Step C: Translating the metallic cylindrical electrode for another distance L2 (to the position of the electrode (3) shown in the drawing) along the same direction as in step B, and measuring the impedance between the two electrodes by using a multimeter, where the impedance is denoted as R2, L2 is greater than 4000 H, H is the thickness of the specimen, and L2 - L1 > 2000 H.

Step D: Calculating the unidirectional conduction ratio of the bipolar current collector according to the following formula: unidirectional conduction ratio = ((R2 - R1)×H)/(R0 × (L2 - L1)).

**Measuring the thickness of a bipolar current collector:**

Measuring the thickness of the bipolar current collector by using a spiral micrometer.

**Testing the tensile strength of a bipolar current collector:**

Cutting the bipolar current collector into a specimen of an appropriate size (such as 100 mm × 10 mm), and testing the tensile strength of the specimen with a tensile tester.

**Testing the weight percent of a conductive material in the mass of a current collector:**

Performing the following test method I or test method II to test the weight percent:

Test method I:

Taking a 10 cm × 10 cm specimen of a bipolar current collector, and weighing the specimen to obtain a weight denoted as M0. Dissolving a polymer substrate material of the bipolar current collector in an appropriate solvent, and filtering out conductive material particles, where the solvent in use is not particularly limited, as long as the solvent can dissolve the polymer substrate material of the bipolar current collector. Washing and drying the conductive material particles filtered out, and weighing the particles to obtain a weight denoted as M1. Therefore, the weight percent of the conductive material in the mass of the current collector is (M1/M0)×100%.

Test method II:

Taking a 10 cm × 10 cm specimen of a bipolar current collector, and weighing the specimen to obtain a weight denoted as M0. Dissolving the conductive material in the bipolar current collector by using aqua regia, and filtering out the polymer substrate material in the conductive material. Washing and drying the polymer substrate material, and weighing the polymer substrate material to obtain a weight denoted as M2. Therefore, the weight percent of the conductive material in the mass of the current collector is (M0 - M2)/M0 × 100%.

**Testing a 0.2 C discharge energy density:**

Charging a lithium-ion battery in Comparative Embodiment 1 at 0.5 C until the voltage reaches 4.45 V, and then charging the battery at a constant voltage until the current reaches 0.025 C. Leaving the battery to stand for 5 minutes, and then discharging the battery at 0.2 C until the voltage reaches 3.0 V.
For a lithium-ion battery in a comparative embodiment or an embodiment other than Comparative Embodiment 1, charging the battery at 0.5 C until the voltage reaches 8.90 V, and then charging the battery at a constant voltage until the current reaches 0.025 C. Leaving the battery to stand for 5 minutes, and then discharging the battery at 0.2 C until the voltage reaches 6.0 V.
Calculating the 0.2 C discharge energy density according to the following formula: Energy density (Wh/kg) = discharge energy (Wh)/weight of the electrochemical device (kg).

**Cycle test:**

Charging the lithium-ion battery in Comparative Embodiment 1 at a constant current of 0.5 C under a temperature of 25 °C until the voltage reaches 4.45 V, and then charging the battery at a constant voltage until the current reaches 0.025 C. Leaving the battery to stand for 5 minutes, and then discharging the battery at 0.5 C until the voltage reaches 3.0 V. Measuring the capacity in this step as an initial capacity, and then performing 50 cycles by charging at 0.5 C and discharging at 0.5 C, and calculating a ratio of the capacity of the lithium-ion battery to the initial capacity.
For a lithium-ion battery in a comparative embodiment or an embodiment other than Comparative Embodiment 1, charging the battery at a constant current of 0.5 C under a temperature of 25 °C until the voltage reaches 8.9 V, and then charging the battery at a constant voltage until the current reaches 0.025 C. Leaving the battery to stand for 5 minutes, and then discharging the battery at 0.5 C until the voltage reaches 6.0 V. Measuring the capacity in this step as an initial capacity, and then performing 50 cycles by charging at 0.5 C and discharging at 0.5 C, and calculating a ratio of the capacity of the lithium-ion battery to the initial capacity.

**Testing 2 C/0.2 C discharge energy density:**

First, testing the 0.2 C discharge energy density according to the method described in "Testing a 0.2 C discharge energy density" above. Subsequently, testing a 2 C discharge energy density, and then calculating a ratio of the 2 C discharge energy density to the 0.2 C discharge energy density.
The method for testing a 2 C discharge energy density is:

Charging a lithium-ion battery in Comparative Embodiment 1 at 0.5 C until the voltage reaches 4.45 V, and then charging the battery at a constant voltage until the current reaches 0.025 C. Leaving the battery to stand for 5 minutes, and then discharging the battery at 2 C until the voltage reaches 3.0 V.

For a lithium-ion battery in a comparative embodiment or an embodiment other than Comparative Embodiment 1, charging the battery at 0.5 C until the voltage reaches 8.90 V, and then charging the battery at a constant voltage until the current reaches 0.025 C. Leaving the battery to stand for 5 minutes, and then discharging the battery at 2 C until the voltage reaches 6.0 V.

Calculating the 2 C discharge energy density according to the following formula: Energy density (Wh/kg) = discharge capacity (Wh)/weight of the electrochemical device (kg).

**Nail penetration test:**

Charging the lithium-ion battery in Comparative Embodiment 1 at a constant current of 0.05 C until the voltage reaches a rated voltage of 4.45 V, and then charging the battery at a constant voltage until the current reaches a cut-off current of 0.025 C so that the battery reaches a fully charged state. Recording the appearance of the battery before the nail penetration test.

For a lithium-ion battery specimen in a comparative embodiment or an embodiment other than Comparative Embodiment 1, charging the battery at a constant current of 0.05 C rate until the voltage reaches a rated voltage of 8.90 V, and then charging the battery at a constant voltage until the current reaches a cut-off current of 0.025 C so that the battery reaches a fully charged state. Recording the appearance of the battery before the nail penetration test.

Performing the nail penetration test on the battery in a 25±3 °C environment, where the nail is 4 mm in diameter, and the penetration speed is 30 mm/s. One nail penetration position is 15 mm distant from the edge on an aluminum tab (Tab) side on an electrochemical cell, and another nail penetration position is 15 mm distant from the edge on a nickel tab side on the electrochemical cell. Stopping the nail penetration test when the test duration reaches 3.5 minutes or the surface temperature of a battery cell drops to 50 °C. Observing the status of the lithium-ion batteries in groups during the test, where each group includes 10 lithium-ion batteries. Determining pass of the test by a specimen if the battery does not catch fire or explode, and determining pass of the nail penetration test by the lithium-ion batteries if 90% or more of the specimens have passed the test.

The preparation parameters and test results of the embodiments and comparative embodiments are shown in Table 1 below:

Table 1 Preparation parameters and test results of embodiments and comparative embodiments

| | Orientation angle of conductive material (°) | Electron resistivity in Z direction (Ω·cm) | Electron resistivity in X-Y in-plane direction (Ω·cm) | Ratio of electron resistivity in X-Y in-plane direction to electron resistivity in Z direction | Unidirectional conduction ratio | Conductive material | Polymer material | Thickness of bipolar current collector (μm) | Weight percent of conductive material in mass of current collector (%) | Tensile strength (MPa) | 0.2 C discharge energy density (Wh/kg) | Cycle capacity retention rate (%) | 2 C/0.2 C discharge energy density (%) | Nail penetration test pass rate |
|---|---|---|---|---|---|---|---|---|---|---|---|---|---|---|
| Embodiment 1 | 5 | $5.40 \times 10^{-2}$ | $6.50 \times 10^{1}$ | 1203.70 | 1239.81 | MWCNT | PET | 20 | 30% | 88.5 | 241 | 92.20% | 82.20% | 8/10 |
| Embodiment 2 | 10 | $8.20 \times 10^{-2}$ | $3.30 \times 10^{1}$ | 402.44 | 422.56 | MWCNT | PET | 20 | 30% | 88.9 | 241 | 92.00% | 82.10% | 8/10 |
| Embodiment 3 | 20 | $3.30 \times 10^{-1}$ | $1.80 \times 10^{1}$ | 54.55 | 55.09 | MWCNT | PET | 20 | 30% | 88.1 | 240 | 91.20% | 81.80% | 8/10 |
| Embodiment 4 | 30 | $3.00 \times 10^{1}$ | $1.50 \times 10^{2}$ | 5.00 | 5.40 | MWCNT | PET | 20 | 10% | 88.3 | 238 | 90.30% | 75.40% | 10/10 |
| Embodiment 5 | 3 | $1.00 \times 10^{-2}$ | $1.90 \times 10^{1}$ | 1900.00 | 2090.00 | MWCNT | PET | 20 | 70% | 72.1 | 242 | 92.30% | 82.30% | 8/10 |
| Embodiment 6 | 3 | $2.50 \times 10^{-1}$ | $1.00 \times 10^{3}$ | 4000.00 | 4240.00 | MWCNT | PET | 20 | 10% | 86.3 | 239 | 92.40% | 81.80% | 10/10 |
| Embodiment 7 | 30 | $3.40 \times 10^{-2}$ | $1.00 \times 10^{1}$ | 294.12 | 300.00 | MWCNT | PET | 20 | 70% | 73.3 | 240 | 91.90% | 82.20% | 8/10 |
| Embodiment 8 | 10 | $9.70 \times 10^{-2}$ | $2.10 \times 10^{1}$ | 216.49 | 225.15 | Graphene | PET | 20 | 30% | 90.1 | 241 | 91.70% | 82.10% | 8/10 |
| Embodiment 9 | 10 | $8.40 \times 10^{-2}$ | $2.70 \times 10^{1}$ | 321.43 | 343.93 | VGCF | PET | 20 | 30% | 89.6 | 241 | 91.90% | 82.20% | 8/10 |
| Embodiment 10 | 10 | $8.50 \times 10^{-2}$ | $3.40 \times 10^{1}$ | 40000 | 408.00 | MWCNT | PEN | 20 | 30% | 96.4 | 240 | 92.00% | 82.20% | 8/10 |
| Embodiment 11 | 10 | $8.00 \times 10^{-2}$ | $3.10 \times 10^{1}$ | 387.50 | 391.38 | MWCNT | PET | 20 | 30% | 103.2 | 241 | 92.00% | 82.30% | 8/10 |

| | Orientation angle of conductive material (°) | Electron resistivity in Z direction (Ω·cm) | Electron resistivity in X-Y in-plane direction (Ω·cm) | Ratio of electron resistivity in X-Y in-plane direction to electron resistivity in Z direction | Unidirectional conduction ratio | Conductive material | Polymer material | Thickness of bipolar current collector (μm) | Weight percent of conductive material in mass of current collector (%) | Tensile strength (MPa) | 0.2 C discharge energy density (Wh/kg) | Cycle capacity retention rate (%) | 2 C/0.2 C discharge energy density (%) | Nail penetration test pass rate |
|---|---|---|---|---|---|---|---|---|---|---|---|---|---|---|
| Embodiment 12 | 10 | $8.50\times10^{-2}$ | $3.10\times10^{1}$ | 364.71 | 393.88 | MWCNT | PET | 500 | 30% | 89.9 | 235 | 91.80% | 79.60% | 10/10 |
| Embodiment 13 | 10 | $8.00\times10^{-2}$ | $3.60\times10^{1}$ | 450.00 | 477.00 | MWCNT | PET | 2 | 30% | 87.0 | 245 | 91.90% | 82.90% | 4/10 |
| Embodiment 14 | 10 | $8.10\times10^{-2}$ | $3.40\times10^{1}$ | 419.75 | 432.35 | MWCNT | PET | 10 | 30% | 88.5 | 243 | 92.20% | 82.60% | 8/10 |
| Embodiment 15 | 10 | $6.50\times10^{-2}$ | $2.50\times10^{1}$ | 384.62 | 400.00 | MWCNT | PET | 10 | 50% | 89.4 | 243 | 92.30% | 82.80% | 8/10 |
| Embodiment 16 | 10 | $5.90\times10^{-2}$ | $1.50\times10^{1}$ | 254.24 | 266.95 | MWCNT | PET | 10 | 50% | 89.7 | 245 | 93.40% | 84.30% | 9/10 |
| Embodiment 17 | 10 | $5.80\times10^{-2}$ | $1.80\times10^{1}$ | 310.34 | 319.66 | MWCNT | PET | 10 | 50% | 89.8 | 244 | 92.70% | 83.50% | 10/10 |
| Embodiment 18 | 10 | $5.60\times10^{-2}$ | $1.30\times10^{1}$ | 232.14 | 253.04 | MWCNT | PET | 10 | 50% | 89.6 | 244 | 93.10% | 84.10% | 8/10 |
| Embodiment 19 | 10 | $6.30\times10^{-2}$ | $2.40\times10^{1}$ | 380.95 | 415.24 | MWCNT | PET | 10 | 50% | 89.9 | 252 | 92.40% | 82.70% | 10/10 |
| Comparative Embodiment 1 | - | $5.20\times10^{-10}$ | $2.30\times10^{-10}$ | 0.44 | 0.46 | - | - | 20 | - | 231.4 | 225 | 85.40% | 82.40% | 0/10 |
| Comparative | - | $9.30\times10^{-10}$ | $9.10\times10^{-10}$ | 0.98 | 1.01 | - | - | 20 | - | 545.1 | 224 | 85.90% | 82.50% | 0/10 |

EP 4 160 750 A1

18

(continued)

| | Orientation angle of conductive material (°) | Electron resistivity in Z direction (Ω·cm) | Electron resistivity in X-Y in-plane direction (Ω·cm) | Ratio of electron resistivity in X-Y in-plane direction to electron resistivity in Z direction | Unidirectional conduction ratio | Conductive material | Polymer material | Thickness of bipolar current collector (μm) | Weight percent of conductive material in mass of current collector (%) | Tensile strength (MPa) | 0.2 C discharge energy density (Wh/kg) | Cycle capacity retention rate (%) | 2 C/0.2 C discharge energy density (%) | Nail penetration test pass rate |
|---|---|---|---|---|---|---|---|---|---|---|---|---|---|---|
| Embodiment 2 | | | | | | | | | | | | | | |
| Comparative Embodiment 3 | - | 8.20 | 7.70 | 0.94 | 1.00 | Carbon black | PET | 20 | 30% | 86.0 | 239 | 86.60% | 77.50% | 8/10 |
| Comparative Embodiment 4 | - | 3.20 | 2.90 | 0.91 | 0.96 | Carbon fiber | PET | 20 | 30% | 88.1 | 240 | 86.70% | 78.80% | 8/10 |
| Comparative Embodiment 5 | - | 4.40 | 4.20 | 0.94 | 0.99 | Graphene | PET | 20 | 30% | 87.9 | 239 | 86.50% | 78.70% | 8/10 |

As can be seen from Embodiments 1 to 19 versus Comparative Embodiments 1 to 2, the 0.2 C discharge energy density of the lithium-ion battery with the bipolar current collector according to this application is increased significantly.

As can be seen from Embodiments 1 to 19 and Comparative Embodiments 1 to 5, the cycle capacity retention rate of the lithium-ion battery with the bipolar current collector according to this application is increased significantly.

As can be seen from Embodiments 1 to 3, 5 to 11, and 13 to 19 versus Comparative Embodiments 3 to 5, the discharge energy density of the lithium-ion battery with the bipolar current collector according to this application is increased significantly in contrast to the lithium-ion battery with an existing polymeric bipolar current collector (for example, in Comparative Embodiments 3 to 5).

As can be seen from Embodiments 1 to 19 versus Comparative Embodiments 1 and 2, the nail penetration test pass rate of the lithium-ion battery with the bipolar current collector according to this application is improved significantly in contrast to the lithium-ion battery with an existing metal-foil bipolar current collector (for example, in Comparative Embodiments 1 and 2).

As can be seen from Embodiment 4, the orientation angle of the conductive material, the electron resistivity of the bipolar current collector in the Z direction, and the weight percent of the conductive material in the mass of the current collector jointly impact the discharge energy density of the lithium-ion battery.

As can be seen from Embodiments 12 to 14, the thickness of the bipolar current collector impacts the discharge energy density of the lithium-ion battery, but the discharge energy density in Embodiment 12 is close to that in Comparative Embodiments 1 and 2, indicating that the impact is not high.

As can be further seen from Embodiments 12 to 14, the number of lithium-ion batteries passing the nail penetration test increases with the increase of the thickness of the bipolar current collector.

As can be seen from Table 1, Embodiment 17 is an optimal embodiment, and Embodiment 19 is designed based on Embodiment 17 but with a different electrode assembly structure, and also achieves excellent performance.

What is described above is merely preferred embodiments of this application, but is not intended to limit this application. Any modifications, equivalent substitutions, and improvements made without departing from the spirit and principles of this application still fall within the protection scope of this application.

**Claims**

1. A current collector, comprising a polymer substrate material and a conductive material, wherein
an electron resistivity of the current collector in an X-Y in-plane direction is 10 $\Omega\cdot$cm to 1000 $\Omega\cdot$cm, and an electron resistivity of the current collector in a Z direction is 0.01 $\Omega\cdot$cm to 30 $\Omega\cdot$cm.

2. The current collector according to claim 1, wherein a weight percent of the conductive material in a mass of the current collector is 10% to 70%.

3. The current collector according to claim 1, wherein the conductive material comprises at least one of a one-dimensional conductive material or a two-dimensional conductive material, and an angle between a length direction of the one-dimensional conductive material or a plane direction of the two-dimensional conductive material and the Z direction of the current collector is 0° to 30°.

4. The current collector according to claim 1, wherein a ratio of the electron resistivity of the current collector in the X-Y in-plane direction to the electron resistivity of the current collector in the Z direction is 5 to 4000.

5. The current collector according to claim 1, wherein a thickness of the current collector is 2 $\mu$m to 500 $\mu$m.

6. The current collector according to claim 1, wherein one end or both ends of the conductive material are exposed on a surface of the polymer substrate material.

7. The current collector according to claim 3, wherein the one-dimensional conductive material is 0.1 $\mu$m to 200 $\mu$m in length, 2 nm to 500 nm in diameter, and 5 $m^2$/g to 2000 $m^2$/g in specific surface area.

8. The current collector according to claim 3, wherein the two-dimensional conductive material is 2 $\mu$m to 10 $\mu$m in length, 6 nm to 20 $\mu$m in thickness, and 0.5 $m^2$/g to 1000 $m^2$/g in specific surface area.

9. The current collector according to claim 1, wherein the current collector satisfies at least one of the following features:

(a) the electron resistivity of the current collector in the X-Y in-plane direction is 50 $\Omega$·cm to 1000 $\Omega$·cm;
(b) the electron resistivity of the current collector in the Z direction is 0.01 $\Omega$·cm to 1 $\Omega$·cm;
(c) a ratio of the electron resistivity of the current collector in the X-Y in-plane direction to the electron resistivity of the current collector in the Z direction is 100 to 1000;
(d) an angle between the conductive material and the Z direction is 0° to 10°;
(e) a thickness of the current collector is 5 $\mu$m to 50 $\mu$m; and
(f) a weight percent of the conductive material in a mass of the current collector is 20% to 60%.

10. The current collector according to claim 1, wherein the current collector satisfies at least one of the following features:

(a) the electron resistivity of the current collector in the X-Y in-plane direction is 100 $\Omega$·cm to 1000 $\Omega$·cm;
(b) the electron resistivity of the current collector in the Z direction is 0.01 $\Omega$·cm to 0.05 $\Omega$·cm;
(c) a ratio of the electron resistivity of the current collector in the X-Y in-plane direction to the electron resistivity of the current collector in the Z direction is 200 to 600;
(d) a thickness of the current collector is 5 $\mu$m to 20 $\mu$m;
(e) a weight percent of the conductive material in a mass of the current collector is 40% to 50%; and
(f) a tensile strength of the current collector is 80 MPa to 100 MPa.

11. The current collector according to claim 1, wherein the conductive material comprises at least one of a carbon material or a metal material.

12. The current collector according to claim 11, wherein the carbon material comprises at least one of single-walled carbon nanotubes, multi-walled carbon nanotubes, conductive carbon fibers, conductive carbon black, fullerene, conductive graphite, or graphene.

13. The current collector according to claim 11, wherein the metal material comprises at least one of Ni, Ti, Ag, Au, Pt, or stainless steel.

14. The current collector according to claim 1, wherein the polymer substrate material comprises at least one of polyethylene terephthalate, polybutylene terephthalate, polyethylene naphthalate, polyether ether ketone, polyimide, polyamide, polyethylene glycol, polyamide imide, polycarbonate, cyclic polyolefin, polyphenylene sulfide, polyvinyl acetate, polytetrafluoroethylene, polymethylene naphthalene, polyvinylidene difluoride, polyethylene naphthalate, polypropylene carbonate, poly(vinylidene difluoride-co-hexafluoropropylene), poly(vinylidene difluoride-co-chlorotrifluoroethylene), organosilicon resin, vinylon, polypropylene, polyethylene, polyvinyl chloride, polystyrene, polyether nitrile, polyurethane, polyphenylene ether, polysulfone, or a derivative thereof.

15. An electrochemical device, comprising the current collector according to any one of claims 1 to 14.

16. An electronic device, comprising the electrochemical device according to claim 15.

FIG. 1

FIG. 2

FIG. 3

FIG. 4

FIG. 5

## INTERNATIONAL SEARCH REPORT

International application No.

**PCT/CN2020/099426**

### A.    CLASSIFICATION OF SUBJECT MATTER

H01M 4/66(2006.01)i;   H01M 10/052(2010.01)i

According to International Patent Classification (IPC) or to both national classification and IPC

### B.    FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI: 集流, 集电, 高分子, 聚合物, 导电, 电阻率, 碳, collector, polymer, conduct+, resistivity, carbon, bipolar

### C.    DOCUMENTS CONSIDERED TO BE RELEVANT

| Category* | Citation of document, with indication, where appropriate, of the relevant passages | Relevant to claim No. |
|---|---|---|
| X | JP 2010170833 A (NISSAN MOTOR CO., LTD.) 05 August 2010 (2010-08-05) description, paragraphs 0011-0092, and figures 1-3 | 1-16 |
| X | CN 104604003 A (KANEKA CORPORATION et al.) 06 May 2015 (2015-05-06) description paragraphs 0009-0059, tables 1-4 | 1, 2, 5, 9-16 |
| A | CN 109690827 A (APPLE INC.) 26 April 2019 (2019-04-26) entire document | 1-16 |
| A | CN 1985400 A (NISSAN MOTOR CO., LTD.) 20 June 2007 (2007-06-20) entire document | 1-16 |

☐ Further documents are listed in the continuation of Box C.          ☑ See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X"  document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| **09 March 2021** | **26 March 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/099426**

| Patent document cited in search report | | | Publication date (day/month/year) | Patent family member(s) | | | Publication date (day/month/year) |
|---|---|---|---|---|---|---|---|
| JP | 2010170833 | A | 05 August 2010 | JP | 5434089 | B2 | 05 March 2014 |
| CN | 104604003 | A | 06 May 2015 | TW | I623139 | B | 01 May 2018 |
| | | | | CN | 104604003 | B | 11 August 2017 |
| | | | | TW | 201415701 | A | 16 April 2014 |
| | | | | EP | 2892097 | B1 | 06 June 2018 |
| | | | | JP | WO2014034758 | A1 | 08 August 2016 |
| | | | | US | 10431830 | B2 | 01 October 2019 |
| | | | | JP | 6079782 | B2 | 15 February 2017 |
| | | | | US | 2015318555 | A1 | 05 November 2015 |
| | | | | KR | 20150048707 | A | 07 May 2015 |
| | | | | EP | 2892097 | A1 | 08 July 2015 |
| | | | | WO | 2014034758 | A1 | 06 March 2014 |
| | | | | EP | 2892097 | A4 | 11 May 2016 |
| CN | 109690827 | A | 26 April 2019 | US | 2019190030 | A1 | 20 June 2019 |
| | | | | WO | 2018057566 | A1 | 29 March 2018 |
| CN | 1985400 | A | 20 June 2007 | CN | 100483831 | C | 29 April 2009 |
| | | | | JP | 5098150 | B2 | 12 December 2012 |
| | | | | US | 2008220330 | A1 | 11 September 2008 |
| | | | | WO | 2006061696 | A2 | 15 June 2006 |
| | | | | WO | 2006061696 | A3 | 24 August 2006 |
| | | | | EP | 1766716 | B1 | 15 April 2015 |
| | | | | US | 8445139 | B2 | 21 May 2013 |
| | | | | JP | 2006190649 | A | 20 July 2006 |
| | | | | EP | 1766716 | A2 | 28 March 2007 |

Form PCT/ISA/210 (patent family annex) (January 2015)